# EUROPEAN PATENT APPLICATION

(11) **EP 4 144 810 A1**
(43) Date of publication of application: **08.03.2023**
(21) Application number: 21795463.5
(22) Date of filing: 22.03.2021
(51) Int. Cl.: C09J 7/38, C09J 11/06, C09J 201/00

(54) **ADHESIVE SHEET**

(30) Priority: 01.05.2020 JP 2020081452
(71) Applicant: Nitto Denko Corporation, Ibaraki-shi, Osaka 567-8680 (JP)
(72) Inventor: NAGATA Mizuho, Ibaraki-shi, Osaka 567-8680 (JP); TACHIKAWA Yu, Ibaraki-shi, Osaka 567-8680 (JP); TAKAHASHI Tomokazu, Ibaraki-shi, Osaka 567-8680 (JP); HONDA Satoshi, Ibaraki-shi, Osaka 567-8680 (JP)
(74) Representative: Müller-Boré & Partner Patentanwälte PartG mbB
(86) International application number: PCT/JP2021/011612
(87) International publication number: WO 2021/220663

(57) **Abstract**

Provided is a pressure-sensitive adhesive sheet that can temporarily fix an adherend in a peelable manner, the pressure-sensitive adhesive sheet being free from requiring high-output laser light irradiation at the time of the peeling of the adherend. The pressure-sensitive adhesive sheet of the present invention includes a pressure-sensitive adhesive layer containing a UV absorber, wherein the pressure-sensitive adhesive layer has a first surface and a second surface opposed to the first surface, and wherein a maximum value S1 of a detection intensity of the UV absorber by time-of-flight secondary ion mass spectrometry (TOF-SIMS) in a range of from the first surface to a depth of 1 µm in a thickness direction and a detection intensity C of the UV absorber by the TOF-SIMS at a center point in the thickness direction of the pressure-sensitive adhesive layer satisfy a relationship: S1/C≥1.1.

## Description

### Technical Field

The present invention relates to a pressure-sensitive adhesive sheet.

### Background Art

When various members typified by an electronic part are processed, the following has been generally performed. Each of the members is temporarily fixed to a support with a pressure-sensitive adhesive sheet, and after the processing, the processed member is peeled from the support. In, for example, Patent Literature 1, there is a description of a method including: processing a substrate (member to be processed) under a state in which the substrate is temporarily fixed to a support via an adhesive layer and a separation layer; breaking the separation layer through laser light irradiation after the processing to peel the substrate from the support together with the adhesive layer; and then removing the adhesive layer from the substrate.

### Citation List

### Patent Literature

[PTL 1] JP 5875850 B2

### Summary of Invention

### Technical Problem

However, the above-mentioned method involves a problem in that high-output laser light irradiation causes damage to the member.

The present invention has been made to solve the problems of the related art, and an object of the present invention is to provide a pressure-sensitive adhesive sheet that can temporarily fix an adherend in a peelable manner, the pressure-sensitive adhesive sheet being free from requiring high-output laser light irradiation at the time of the peeling of the adherend.

### Solution to Problem

According to one embodiment of the present invention, there is provided a pressure-sensitive adhesive sheet, including a pressure-sensitive adhesive layer containing a UV absorber, wherein the pressure-sensitive adhesive layer has a first surface and a second surface opposed to the first surface, and wherein a maximum value S1 of a detection intensity of the UV absorber by time-of-flight secondary ion mass spectrometry (TOF-SIMS) in a range of from the first surface to a depth of 1 *µ*m in a thickness direction and a detection intensity C of the UV absorber by the TOF-SIMS at a center point in the thickness direction of the pressure-sensitive adhesive layer satisfy a relationship: S1/C≥1.1.

In one embodiment, a maximum value S2 of a detection intensity of the UV absorber by the TOF-SIMS in a range of from the second surface to a depth of 1 *µ*m in the thickness direction and the detection intensity C of the UV absorber by the TOF-SIMS at the center point in the thickness direction of the pressure-sensitive adhesive layer satisfy a relationship: S2/C≥1.1.

### Advantageous Effects of Invention

According to the present invention, the pressure-sensitive adhesive sheet that can temporarily fix an adherend in a peelable manner, the pressure-sensitive adhesive sheet being free from requiring high-output laser light irradiation at the time of the peeling of the adherend, can be provided.

### Brief Description of Drawings

FIG. **1(a)** is a schematic sectional view of a pressure-sensitive adhesive sheet according to one embodiment of the present invention. FIG. **1(b)** is a schematic sectional view of a pressure-sensitive adhesive sheet according to another embodiment of the present invention.
FIG. **2** is a TOF-SIMS analysis chart measured in Example 1.

### Description of Embodiments

### A. Outline of Pressure-sensitive Adhesive Sheet

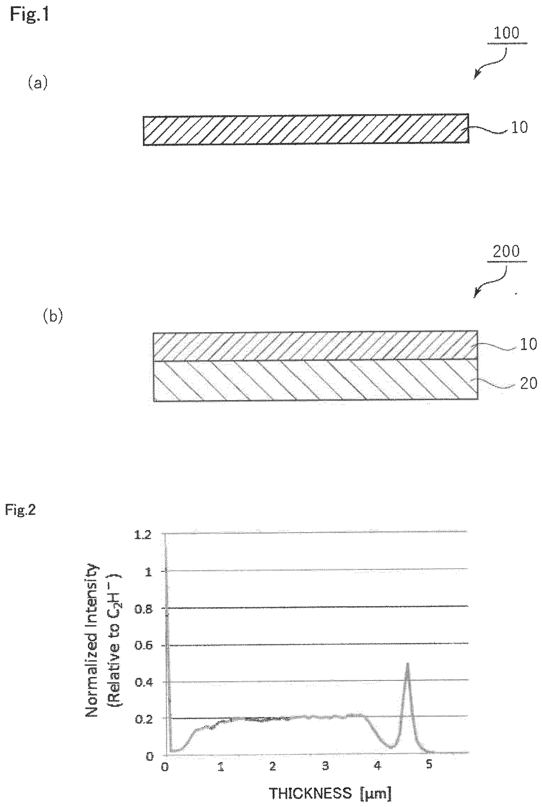

FIG. **1(a)** is a schematic sectional view of a pressure-sensitive adhesive sheet according to one embodiment of the present invention. A pressure-sensitive adhesive sheet **100** according to this embodiment includes a pressure-sensitive adhesive layer **10.** The pressure-sensitive adhesive layer **10** contains a UV absorber. FIG. **1(b)** is a schematic sectional view of a pressure-sensitive adhesive sheet according to another embodiment of the present invention. A pressure-sensitive adhesive sheet **200** according to this embodiment further includes a base material **20,** and the pressure-sensitive adhesive layer **10** is arranged on at least one side of the base material **20.** In the pressure-sensitive adhesive sheet of the present invention, a release liner may be arranged outside the pressure-sensitive adhesive layer for the purpose of protecting the pressure-sensitive adhesive surface of the sheet until the sheet is subjected to use, though the liner is not shown. In addition, the pressure-sensitive adhesive sheet may further include any appropriate other layer as long as the effects of the present invention are obtained. In one embodiment, as illustrated in FIG. **1(a)****,** the pressure-sensitive adhesive sheet of the present invention includes only one pressure-sensitive adhesive layer. In another embodiment, as illustrated in FIG. **1(b)****,** the pressure-sensitive adhesive sheet of the present invention includes the base material and the pressure-sensitive adhesive layer, and the pressure-sensitive adhesive layer is arranged on the base material directly (i.e., without via any other layer). In the present invention, as described later, an adherend can be satisfactorily peeled by a reduction in pressure-sensitive adhesive strength of the pressure-sensitive adhesive layer and the occurrence of strain along with an increase in elastic modulus, and hence the pressure-sensitive adhesive sheet can be formed without arrangement of a layer except the pressure-sensitive adhesive layer for separating the adherend from the pressure-sensitive adhesive sheet (so-called separation layer).

In the present invention, the pressure-sensitive adhesive layer contains the UV absorber, and hence the adherend can be peeled by laser light irradiation. More specifically, when the pressure-sensitive adhesive layer is irradiated with laser light, the UV absorber or the photopolymerization initiator is heated to cause strain in the pressure-sensitive adhesive layer, with the result that peelability is expressed in a portion irradiated with the laser light. According to the present invention, strain can be caused in the pressure-sensitive adhesive layer in a minute range as described above. Because of this, even when a small adherend is processed, the adherend can be satisfactorily peeled. In addition, even when a small adherend that needs to be peeled and a small adherend that does not need to be peeled are temporarily fixed so as to be adjacent to each other, only the small adherend that needs to be peeled can be peeled, and unnecessary separation of the small adherend that does not need to be peeled can be prevented.

The pressure-sensitive adhesive layer has a first surface (main surface) and a second surface opposed to the first surface. A maximum value S1 of a detection intensity of the UV absorber by time-of-flight secondary ion mass spectrometry (TOF-SIMS) in a range of from the first surface to a depth of 1 *µ*m in a thickness direction and a detection intensity C of the UV absorber by the TOF-SIMS at a center point in the thickness direction of the pressure-sensitive adhesive layer satisfy a relationship: S1/C≥1.1. When the S1 and the C have such relationship, that is, when the UV absorber is unevenly distributed in the vicinity of the first surface, a pressure-sensitive adhesive sheet that can express preferred peelability with low-output laser light can be obtained. The S1/C is more preferably 1.2 or more, still more preferably 1.5 or more, particularly preferably 2 or more. The upper limit of the SLIC is preferably 40, more preferably 30, still more preferably 20 or less. When the SLIC falls within such ranges, a pressure-sensitive adhesive sheet excellent in pressure-sensitive adhesive property can be obtained. The detection intensity of the UV absorber by the time-of-flight secondary ion mass spectrometry (TOF-SIMS) is based on the presence distribution of the UV absorber.

In one embodiment, a maximum value S2 of a detection intensity of the UV absorber by the TOF-SIMS in a range of from the second surface to a depth of 1 *µ*m in the thickness direction and the detection intensity C of the UV absorber by the TOF-SIMS at a center point in the thickness direction of the pressure-sensitive adhesive layer satisfy a relationship: S2/C≥1.1. When the S2 and the C have such relationship, that is, when the UV absorber is unevenly distributed in the vicinity of the second surface, a pressure-sensitive adhesive sheet that can express preferred peelability with low-output laser light also in the second surface can be obtained. The S2/C is more preferably 1.2 or more, still more preferably 1.5 or more, particularly preferably 2 or more. The upper limit of the S2/C is preferably 40, more preferably 30, still more preferably 20 or less. When the S2/C falls within such ranges, a pressure-sensitive adhesive sheet excellent in pressure-sensitive adhesive property in the second surface can be obtained.

In one embodiment, when the pressure-sensitive adhesive sheet is formed of only one pressure-sensitive adhesive layer, the S1 and the C have the relationship: S1/C≥1.1. In this embodiment, the first surface may function as a peelable surface. In another embodiment, when the pressure-sensitive adhesive sheet is formed of only one pressure-sensitive adhesive layer, the S1 and the C have the relationship: S1/C≥1.1 (preferably 1.2, more preferably 1.5), and the S2 and the C have the relationship: S2/C≥1.1 (preferably 1.2, more preferably 1.5). In this embodiment, the first surface and the second surface may each function as a peelable surface. According to such embodiment, there can be provided a pressure-sensitive adhesive sheet that is particularly suitable for use in temporarily fixing an adherend and peeling the adherend after processing.

In one embodiment, when the pressure-sensitive adhesive sheet is formed of a pressure-sensitive adhesive layer and a base material, the S1 and the C have the relationship: S1/C≥1.1 (preferably 1.2, more preferably 1.5) . In this embodiment, the first surface may be a surface of the pressure-sensitive adhesive layer on an opposite side to the base material.

The transmittance of the pressure-sensitive adhesive sheet of the present invention for light having a wavelength of 355 nm is preferably 50% or less. In the present invention, the laser output at the time of the peeling can be reduced by reducing the light transmittance. The pressure-sensitive adhesive sheet of the present invention expresses the peelability with low-output laser light, and hence the use of the pressure-sensitive adhesive sheet can reduce damage to the adherend at the time of the peeling to prevent the breakage of the adherend. The transmittance of the pressure-sensitive adhesive sheet of the present invention for light having a wavelength of 355 nm is preferably 40% or less, more preferably 30% or less. When the light transmittance falls within such ranges, the above-mentioned effect becomes more significant. The light transmittance of the pressure-sensitive adhesive sheet is a light transmittance in the thickness direction of the pressure-sensitive adhesive sheet, and is a light transmittance to be measured for all the layers for forming the pressure-sensitive adhesive sheet. In the present invention, the transmittance of the pressure-sensitive adhesive sheet for light having a wavelength of 355 nm may be controlled by adjusting the content of the UV absorber to be incorporated into the pressure-sensitive adhesive layer.

The visible light transmittance of the pressure-sensitive adhesive sheet of the present invention is preferably 50% or more, more preferably 60% or more, still more preferably 70% or more. When the visible light transmittance falls within such ranges, there can be obtained such a pressure-sensitive adhesive sheet that when an adherend is peeled by laser light irradiation, the adherend serving as a peeling object can be satisfactorily viewed through the pressure-sensitive adhesive sheet. Although the visible light transmittance of the pressure-sensitive adhesive sheet is preferably as high as possible, its upper limit is, for example, 95% (preferably 100%) .

The haze value of the pressure-sensitive adhesive sheet of the present invention is preferably 70% or less, more preferably 65% or less. When the haze value falls within such ranges, there can be obtained such a pressure-sensitive adhesive sheet that when an adherend is peeled by laser light irradiation, the adherend serving as a peeling object can be satisfactorily viewed through the pressure-sensitive adhesive sheet. Although the haze value of the pressure-sensitive adhesive sheet is preferably as low as possible, its lower limit is, for example, 0.1%.

An initial pressure-sensitive adhesive strength at 23°C when the pressure-sensitive adhesive sheet of the present invention is bonded to a stainless-steel plate is preferably from 0.1 N/20 mm to 15 N/20 mm, more preferably from 0.5 N/20 mm to 10 N/20 mm. When the initial pressure-sensitive adhesive strength falls within such ranges, a pressure-sensitive adhesive sheet that can satisfactorily hold an adherend can be obtained. The pressure-sensitive adhesive strength is measured in conformity with JIS Z 0237:2000. Specifically, the measurement is performed by: reciprocating a 2-kilogram roller once to bond the pressure-sensitive adhesive sheet to the stainless-steel plate (arithmetic average surface roughness Ra: 50±25 nm); leaving the resultant to stand under 23°C for 30 minutes; and then peeling the pressure-sensitive adhesive sheet under the conditions of a peel angle of 180° and a peel rate (tensile rate) of 300 mm/min. Although the pressure-sensitive adhesive strength of the pressure-sensitive adhesive layer may be changed by laser light irradiation and may be changed by active energy ray irradiation depending on the configuration of the pressure-sensitive adhesive layer, the term "initial pressure-sensitive adhesive strength" as used herein means a pressure-sensitive adhesive strength before the active energy ray irradiation and the laser light irradiation. In one embodiment, the first surface may have an initial pressure-sensitive adhesive strength in the above-mentioned ranges. In another embodiment, the first surface and the second surface may each have an initial pressure-sensitive adhesive strength in the above-mentioned ranges.

In one embodiment, when the pressure-sensitive adhesive layer contains an active energy ray-curable pressure-sensitive adhesive (described later in detail), a pressure-sensitive adhesive strength (sometimes referred to as "post-curing pressure-sensitive adhesive strength") at 23°C after the pressure-sensitive adhesive sheet has been bonded to a mirror wafer made of silicon, and the resultant has been irradiated with UV light having an integrated light quantity of 460 mJ/cm² is preferably from 0.01 N/20 mm to 0.3 N/20 mm, more preferably from 0.02 N/20 mm to 0.2 N/20 mm. When the pressure-sensitive adhesive strength falls within such ranges, a pressure-sensitive adhesive sheet having a reduced amount of an adhesive residue can be obtained. The UV irradiation is performed by, for example, irradiating the pressure-sensitive adhesive layer with UV light from a high-pressure mercury lamp (characteristic wavelength: 365 nm, integrated light quantity: 460 mJ/cm², irradiation energy: 70 W/cm², irradiation time: 6.6 seconds) through use of a UV irradiation apparatus (manufactured by Nitto Seiki Co., Ltd., product name: "UM-810"). In one embodiment, the first surface may have a post-curing pressure-sensitive adhesive strength in the above-mentioned ranges. In another embodiment, the first surface and the second surface may each have a post-curing pressure-sensitive adhesive strength in the above-mentioned ranges.

The thickness of the pressure-sensitive adhesive sheet is preferably from 1 µm to 300 µm, more preferably from 5 µm to 200 µm.

### B. Pressure-sensitive Adhesive Layer

The thickness of the pressure-sensitive adhesive layer is preferably 20 µm or less. When the thickness falls within such range, there can be obtained a pressure-sensitive adhesive sheet that can further reduce a laser output at the time of the peeling of an adherend, and hence excellently expresses its peelability. The thickness of the pressure-sensitive adhesive layer is more preferably 10 um or less, still more preferably 8 µm or less, still more preferably from 1 um to 8 um. When the thickness falls within such ranges, the above-mentioned effect becomes significant.

As described above, the pressure-sensitive adhesive layer contains the UV absorber. In one embodiment, the pressure-sensitive adhesive layer is formed of a pressure-sensitive adhesive having pressure sensitivity and containing a UV absorber. In another embodiment, the pressure-sensitive adhesive layer is formed of an active energy ray-curable pressure-sensitive adhesive containing a UV absorber. The irradiation of the pressure-sensitive adhesive sheet containing the active energy ray-curable pressure-sensitive adhesive with an active energy ray reduces the pressure-sensitive adhesive strength of the entirety of the pressure-sensitive adhesive layer. When the laser light irradiation is performed as described above after the reduction in pressure-sensitive adhesive strength by the irradiation of the entirety of the pressure-sensitive adhesive layer of the pressure-sensitive adhesive sheet having bonded thereto an adherend with the active energy ray, an adhesive residue after the peeling of the adherend can be prevented. Examples of the active energy ray include a gamma ray, UV light, visible light, an infrared ray (heat ray), a radio wave, an alpha ray, a beta ray, an electron beam, a plasma flow, an ionizing ray, and a particle beam. Of those, UV light is preferred.

### (Pressure-sensitive Adhesive having Pressure Sensitivity)

Examples of the pressure-sensitive adhesive having pressure sensitivity include an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, and a styrene-diene block copolymer-based pressure-sensitive adhesive. Of those, an acrylic pressure-sensitive adhesive or a rubber-based pressure-sensitive adhesive is preferred, and an acrylic pressure-sensitive adhesive is more preferred. Those pressure-sensitive adhesives may be used alone or in combination thereof.

An example of the acrylic pressure-sensitive adhesive is an acrylic pressure-sensitive adhesive containing, as a base polymer, an acrylic polymer (homopolymer or copolymer) using one kind or two or more kinds of (meth)acrylic acid alkyl esters as a monomer component. Specific examples of the (meth)acrylic acid alkyl ester include (meth)acrylic acid C1-20 alkyl esters, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, a (meth)acrylic acid alkyl ester having a linear or branched alkyl group having 4 to 18 carbon atoms may be preferably used.

The acrylic polymer may contain units corresponding to other monomer components copolymerizable with the (meth)acrylic acid alkyl ester, as required, for the purpose of modifying cohesive strength, heat resistance, cross-linkability, and the like. Examples of such monomer component include: carboxyl group-containing monomers, such as acrylic acid, methacrylic acid, carboxyethyl acrylate, carboxypentyl acrylate, itaconic acid, maleic acid, fumaric acid, and crotonic acid; acid anhydride monomers, such as maleic anhydride and itaconic anhydride; hydroxyl group-containing monomers, such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfonic acid group-containing monomers, such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amide-based monomers, such as (meth)acrylamide, N,N-dimethyl (meth)acrylamide, N-butyl (meth)acrylamide, N-methylol (meth)acrylamide, and N-methylolpropane (meth)acrylamide; aminoalkyl (meth)acrylate-based monomers, such as aminoethyl (meth)acrylate, N,N-dimethylaminoethyl (meth)acrylate, and t-butylaminoethyl (meth)acrylate; alkoxyalkyl (meth)acrylate-based monomers, such as methoxyethyl (meth)acrylate and ethoxyethyl (meth)acrylate; maleimide-based monomers, such as N-cyclohexylmaleimide, N-isopropylmaleimide, N-laurylmaleimide, and N-phenylmaleimide; itaconimide-basedmonomers, such as N-methylitaconimide, N-ethylitaconimide, N-butylitaconimide, N-octylitaconimide, N-2-ethylhexylitaconimide, N-cyclohexylitaconimide, and N-laurylitaconimide; succinimide-based monomers, such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl-based monomers, such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, α-methylstyrene, and N-vinylcaprolactam; cyanoacrylate monomers, such as acrylonitrile and methacrylonitrile; epoxy group-containing acrylic monomers such as glycidyl (meth)acrylate; glycol-based acrylic ester monomers, such as polyethylene glycol (meth)acrylate, polypropylene glycol (meth)acrylate, methoxy ethylene glycol (meth)acrylate, and methoxy polypropylene glycol (meth)acrylate; acrylic acid ester-based monomers each having a heterocycle, a halogen atom, a silicon atom, or the like, such as tetrahydrofurfuryl (meth)acrylate, fluorine (meth)acrylate, and silicone (meth)acrylate; polyfunctional monomers, such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate; olefin-based monomers, such as isoprene, butadiene, and isobutylene; and vinyl ether-based monomers such as vinyl ether. Those monomer components may be used alone or in combination thereof.

Examples of the rubber-based pressure-sensitive adhesive include rubber-based pressure-sensitive adhesives containing, as base polymers: natural rubbers; synthetic rubbers, such as a polyisoprene rubber, a styrene-butadiene (SB) rubber, a styrene-isoprene (SI) rubber, a styrene-isoprene-styrene block copolymer (SIS) rubber, a styrene-butadiene-styrene block copolymer (SBS) rubber, a styrene-ethylene-butylene-styrene block copolymer (SEBS) rubber, a styrene-ethylene-propylene-styrene block copolymer (SEPS) rubber, a styrene-ethylene-propylene block copolymer (SEP) rubber, a reclaimed rubber, a butyl rubber, polyisobutylene, and modified products thereof; and the like.

The pressure-sensitive adhesive having pressure sensitivity may contain any appropriate additive as required. Examples of the additive include a cross-linking agent, a tackifier (e.g., a rosin-based tackifier, a terpene-based tackifier, a hydrocarbon-based tackifier, or the like), a plasticizer (e.g., a trimellitic acid ester-based plasticizer or a pyromellitic acid ester-based plasticizer), a pigment, a dye, an age resistor, a conductive material, an antistatic agent, a light stabilizer, a peeling modifier, a softening agent, a surfactant, a flame retardant, and an antioxidant.

Examples of the cross-linking agent include an isocyanate-based cross-linking agent, an epoxy-based cross-linking agent, a melamine-based cross-linking agent, and a peroxide-based cross-linking agent, and as well, a urea-based cross-linking agent, a metal alkoxide-based cross-linking agent, a metal chelate-based cross-linking agent, a metal salt-based cross-linking agent, a carbodiimide-based cross-linking agent, an oxazoline-based cross-linking agent, an aziridine-based cross-linking agent, and an amine-based cross-linking agent. Of those, an isocyanate-based cross-linking agent or an epoxy-based cross-linking agent is preferred.

Specific examples of the isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Nippon Polyurethane Industry Co., Ltd., product name: "CORONATE L"), a trimethylolpropane/hexamethylene diisocyanate trimer adduct (manufactured by Nippon Polyurethane Industry Co., Ltd., product name: "CORONATE HL"), and an isocyanurate form of hexamethylene diisocyanate (manufactured by Nippon Polyurethane Industry Co., Ltd., product name: "CORONATE HX") . The content of the isocyanate-based cross-linking agent may be set to any appropriate amount in accordance with a desired pressure-sensitive adhesive strength, and is typically from 0.1 part by weight to 20 parts by weight, more preferably from 0.5 part by weight to 10 parts by weight with respect to 100 parts by weight of the base polymer.

Examples of the epoxy-based cross-linking agent include N,N,N',N'-tetraglycidyl-m-xylenediamine, diglycidylaniline, 1,3-bis(N,N-glycidylaminomethyl)cyclohexane (manufactured by Mitsubishi Gas Chemical Company, Inc., product name: "TETRAD-C"), 1,6-hexanediol diglycidyl ether (manufactured by Kyoeisha Chemical Co., Ltd., product name: "Epolite 1600"), neopentyl glycol diglycidyl ether (manufactured by Kyoeisha Chemical Co., Ltd., product name: "Epolite 1500NP"), ethylene glycol diglycidyl ether (manufactured by Kyoeisha Chemical Co., Ltd., product name: "Epolite 40E"), propylene glycol diglycidyl ether (manufactured by Kyoeisha Chemical Co., Ltd., product name: "Epolite 70P"), polyethylene glycol diglycidyl ether (manufactured by NOF Corporation, product name: "EPIOL E-400"), polypropylene glycol diglycidyl ether (manufactured by NOF Corporation, product name: "EPIOL P-200"), sorbitol polyglycidyl ether (manufactured by Nagase ChemteX Corporation, product name: "Denacol EX-611"), glycerol polyglycidyl ether (manufactured by Nagase ChemteX Corporation, product name: "Denacol EX-314"), pentaerythritol polyglycidyl ether, polyglycerol polyglycidyl ether (manufactured by Nagase ChemteX Corporation, product name: "Denacol EX-512"), sorbitan polyglycidyl ether, trimethylolpropane polyglycidyl ether, adipic acid diglycidyl ester, o-phthalic acid diglycidyl ester, triglycidyl-tris(2-hydroxyethyl)isocyanurate, resorcin diglycidyl ether, bisphenol-S-diglycidyl ether, and an epoxy-based resin having two or more epoxy groups in a molecule thereof. The content of the epoxy-based cross-linking agent may be set to any appropriate amount in accordance with a desired pressure-sensitive adhesive strength, and is typically from 0.01 part by weight to 10 parts by weight, more preferably from 0.03 part by weight to 5 parts by weight with respect to 100 parts by weight of the base polymer.

### (Active Energy Ray-curable Pressure-sensitive Adhesive)

In one embodiment, an active energy ray-curable pressure-sensitive adhesive (A1), which contains a base polymer serving as a parent agent and an active energy ray-reactive compound (monomer or oligomer) that can be bonded to the base polymer, is used as the active energy ray-curable pressure-sensitive adhesive. In another embodiment, an active energy ray-curable pressure-sensitive adhesive (A2) containing an active energy ray-reactive polymer as the base polymer is used. The base polymer preferably has a functional group that can react with a photopolymerization initiator. Examples of the functional group include a hydroxyl group and a carboxyl group.

Examples of the base polymer to be used in the pressure-sensitive adhesive (A1) include: rubber-based polymers, such as a natural rubber, a polyisobutylene rubber, a styrene-butadiene rubber, a styrene-isoprene-styrene block copolymer rubber, a reclaimed rubber, a butyl rubber, a polyisobutylene rubber, and a nitrile rubber (NBR); silicone-based polymers; and acrylic polymers. Those polymers may be used alone or in combination thereof. Of those, an acrylic polymer is preferred.

Examples of the acrylic polymer include: homopolymers or copolymers of hydrocarbon group-containing (meth)acrylic acid esters, such as a (meth)acrylic acid alkyl ester, a (meth)acrylic acid cycloalkyl ester, and a (meth)acrylic acid aryl ester; and copolymers of the hydrocarbon group-containing (meth)acrylic acid esters and other copolymerizable monomers. Examples of the (meth)acrylic acid alkyl ester include (meth)acrylic acid methyl ester, ethyl ester, propyl ester, isopropyl ester, butyl ester, isobutyl ester, s-butyl ester, t-butyl ester, pentyl ester, isopentyl ester, hexyl ester, heptyl ester, octyl ester, 2-ethylhexyl ester, isooctyl ester, nonyl ester, decyl ester, isodecyl ester, undecyl ester, dodecyl ester, that is, lauryl ester, tridecyl ester, tetradecyl ester, hexadecyl ester, octadecyl ester, and eicosyl ester. Examples of the (meth)acrylic acid cycloalkyl ester include (meth)acrylic acid cyclopentyl ester and cyclohexyl ester. Examples of the (meth)acrylic acid aryl ester include phenyl (meth)acrylate and benzyl (meth)acrylate. The content of a constituent unit derived from the hydrocarbon group-containing (meth)acrylic acid ester is preferably 40 parts by weight or more, more preferably 60 parts by weight or more with respect to 100 parts by weight of the base polymer.

Examples of the other copolymerizable monomer include functional group-containing monomers, such as a carboxy group-containing monomer, an acid anhydride monomer, a hydroxy group-containing monomer, a glycidyl group-containing monomer, a sulfonic acid group-containing monomer, a phosphoric acid group-containing monomer, acrylamide, and acrylonitrile. Examples of the carboxy group-containing monomer include acrylic acid, methacrylic acid, carboxyethyl (meth)acrylate, carboxypentyl (meth)acrylate, itaconic acid, maleic acid, fumaric acid, and crotonic acid. Examples of the acid anhydride monomer include maleic anhydride and itaconic anhydride. Examples of the hydroxy group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate. Examples of the glycidyl group-containing monomer include glycidyl (meth)acrylate and methylglycidyl (meth)acrylate. Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid. An example of the phosphoric acid group-containing monomer is 2-hydroxyethylacryloyl phosphate. An example of the acrylamide is N-acryloylmorpholine. Those monomers may be used alone or in combination thereof. The content of a constituent unit derived from the copolymerizable monomer is preferably 60 parts by weight or less, more preferably 40 parts by weight or less with respect to 100 parts by weight of the base polymer.

The acrylic polymer may contain a constituent unit derived from a polyfunctional monomer for forming a cross-linked structure in a polymer skeleton thereof. Examples of the polyfunctional monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy (meth)acrylate (that is, polyglycidyl (meth)acrylate), polyester (meth)acrylate, and urethane (meth)acrylate. Those monomers may be used alone or in combination thereof. The content of the constituent unit derived from the polyfunctional monomer is preferably 40 parts by weight or less, more preferably 30 parts by weight or less with respect to 100 parts by weight of the base polymer.

The weight-average molecular weight of the acrylic polymer is preferably from 100,000 to 3,000,000, more preferably from 200,000 to 2,000,000. The weight-average molecular weight may be measured by GPC (solvent: THF).

The active energy ray-reactive compound that may be used in the pressure-sensitive adhesive (A1) is, for example, a photoreactive monomer or oligomer having a functional group having a polymerizable carbon-carbon multiple bond, such as an acryloyl group, a methacryloyl group, a vinyl group, an allyl group, or an acetylene group. Specific examples of the photoreactive monomer include: esterified products of (meth)acrylic acid and polyhydric alcohols, such as trimethylolpropane tri(meth)acrylate, tetramethylolmethane tetra(meth)acrylate, pentaerythritol tri(meth)acrylate, pentaerythritol tetra(meth)acrylate, dipentaerythritol monohydroxypenta(meth)acrylate, dipentaerythritol hexa(meth)acrylate, 1,4-butanediol di(meth)acrylate, 1,6-hexanediol di(meth)acrylate, and polyethylene glycol di(meth)acrylate; polyfunctional urethane (meth)acrylate; epoxy (meth)acrylate; and oligoester (meth)acrylates. In addition, a monomer, such as methacryloisocyanate, 2-methacryloyloxyethyl isocyanate (2-isocyanatoethyl methacrylate), or m-isopropenyl-α,α-dimethylbenzyl isocyanate, may be used. Specific examples of the photoreactive oligomer include dimers to pentamers of the above-mentioned monomers. The molecular weight of the photoreactive oligomer is preferably from 100 to 3,000.

In addition, a monomer, such as epoxidized butadiene, glycidyl methacrylate, acrylamide, or vinylsiloxane, or an oligomer formed of the monomer may be used as the active energy ray-reactive compound.

Further, a mixture of an organic salt such as an onium salt, and a compound having a plurality of heterocycles in a molecule thereof may be used as the active energy ray-reactive compound. When the mixture is irradiated with an active energy ray (e.g., UV light or an electron beam), the organic salt cleaves to produce an ion, and the ion serves as an initiation species to cause the ring-opening reaction of the heterocycles. Thus, a three-dimensional network structure can be formed. Examples of the organic salt include an iodonium salt, a phosphonium salt, an antimonium salt, a sulfonium salt, and a borate salt. Examples of the heterocycles in the compound having the plurality of heterocycles in a molecule thereof include oxirane, oxetane, oxolane, thiirane, and aziridine.

The content of the active energy ray-reactive compound in the pressure-sensitive adhesive (A1) is preferably from 0.1 part by weight to 500 parts by weight, more preferably from 5 parts by weight to 300 parts by weight, still more preferably from 40 parts by weight to 150 parts by weight with respect to 100 parts by weight of the base polymer.

The active energy ray-reactive polymer (base polymer) in the pressure-sensitive adhesive (A2) is, for example, a polymer having a functional group having a carbon-carbon multiple bond, such as an acryloyl group, a methacryloyl group, a vinyl group, an allyl group, or an acetylene group. Specific examples of the active energy ray-reactive polymer include: polymers formed of polyfunctional (meth)acrylates; photocationically polymerizable polymers; cinnamoyl group-containing polymers such as polyvinyl cinnamate; diazotized amino novolac resins; and polyacrylamide.

In one embodiment, there is used an active energy ray-reactive polymer formed by introducing an active energy ray-polymerizable carbon-carbon multiple bond into a side chain of the above-mentioned acrylic polymer, the main chain thereof, and/or a terminal of the main chain. An approach to introducing a radiation-polymerizable carbon-carbon double bond into the acrylic polymer is, for example, a method including: copolymerizing raw material monomers including a monomer having a predetermined functional group (first functional group) to provide the acrylic polymer; and then subjecting a compound having a predetermined functional group (second functional group) that can react with the first functional group to be bonded thereto and the radiation-polymerizable carbon-carbon double bond to a condensation reaction or an addition reaction with the acrylic polymer while maintaining the radiation polymerizability of the carbon-carbon double bond.

Examples of the combination of the first functional group and the second functional group include: a carboxy group and an epoxy group; an epoxy group and a carboxy group; a carboxy group and an aziridyl group; an aziridyl group and a carboxy group; a hydroxy group and an isocyanate group; and an isocyanate group and a hydroxy group. Of those combinations, the combination of a hydroxy group and an isocyanate group or the combination of an isocyanate group and a hydroxy group is preferred from the viewpoint of the ease with which a reaction between the groups is tracked. In addition, technical difficulty in producing a polymer having an isocyanate group having high reactivity is high, and hence a case in which the first functional group of the acrylic polymer side is a hydroxy group and the second functional group is an isocyanate group is more preferred from the viewpoint of the ease with which the acrylic polymer is produced or obtained. In this case, examples of an isocyanate compound having both of a radiation-polymerizable carbon-carbon double bond and an isocyanate group serving as the second functional group include methacryloyl isocyanate, 2-methacryloyloxyethyl isocyanate, and m-isopropenyl-α,α-dimethylbenzyl isocyanate. In addition, a polymer containing a constituent unit derived from the above-mentioned hydroxy group-containing monomer is preferred as the acrylic polymer having the first functional group, and a polymer containing a constituent unit derived from an ether-based compound, such as 2-hydroxyethyl vinyl ether, 4-hydroxybutyl vinyl ether, or diethylene glycol monovinyl ether, is also preferred.

The pressure-sensitive adhesive (A2) may further contain the active energy ray-reactive compound (monomer or oligomer).

The active energy ray-curable pressure-sensitive adhesive may contain the photopolymerization initiator.

Any appropriate initiator may be used as the photopolymerization initiator. Examples of the photopolymerization initiator include: α-ketol-based compounds, such as 4-(2-hydroxyethoxy)phenyl(2-hydroxy-2-propyl) ketone, α-hydroxy-α,α'-dimethylacetophenone, 2-methyl-2-hydroxypropiophenone, and 1-hydroxycyclohexyl phenyl ketone; acetophenone-based compounds, such as methoxyacetophenone, 2,2-dimethoxy-2-phenylacetophenone, 2,2-diethoxyacetophenone, and 2-methyl-1-[4-(methylthio)-phenyl]-2-morpholinopropane-1; benzoin ether-based compounds, such as benzoin ethyl ether, benzoin isopropyl ether, and anisoin methyl ether; ketal-based compounds such as benzyl dimethyl ketal; aromatic sulfonyl chloride-based compounds such as 2-naphthalenesulfonyl chloride; photoactive oxime-based compounds such as 1-phenone-1,1-propanedione-2-(o-ethoxycarbonyl)oxime; benzophenone-based compounds, such as benzophenone, benzoylbenzoic acid, and 3,3'-dimethyl-4-methoxybenzophenone; thioxanthone-based compounds, such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; camphorquinone; halogenated ketones; acylphosphinoxides; and acylphosphonates. The usage amount of the photopolymerization initiator may be set to any appropriate amount.

In one embodiment, a photopolymerization initiator having a maximum absorption wavelength in the range of 400 nm or less (preferably 380 nm or less, more preferably 340 nm or less) is used. The use of such photopolymerization initiator can provide such a pressure-sensitive adhesive sheet that when the pressure-sensitive adhesive strength of the entirety of its pressure-sensitive adhesive layer is reduced by active energy ray irradiation, the curing reaction of the pressure-sensitive adhesive of the layer preferably occurs, and hence an adhesive residue is particularly reduced.

A commercially available product may be used as the photopolymerization initiator. Examples of the photopolymerization initiator having a maximum absorption wavelength in the range of 400 nm or less include products available under the product names "IRGACURE 127", "IRGACURE 369", "IRGACURE 369E", "IRGACURE 379", "IRGACURE 379EG", "IRGACURE 819", "IRGACURE TOP", "IRGACURE 784", and "IRGACURE OXE01" from BASF SE.

In one embodiment, the active energy ray-curable pressure-sensitive adhesive may contain a photosensitizer.

In one embodiment, the photosensitizer may be used in combination with the photopolymerization initiator. The photosensitizer can generate a radical from the photopolymerization initiator by transferring, to the photopolymerization initiator, energy obtained by the absorption of light by the photosensitizer itself, and hence can advance the polymerization of the pressure-sensitive adhesive layer with light having a long wavelength at which no absorption peak of the photopolymerization initiator itself is present. Accordingly, the incorporation of the photosensitizer can enlarge a difference between the absorption wavelength of the UV absorber and the wavelength at which the radical can be generated from the photopolymerization initiator. As a result, the photopolymerization of the pressure-sensitive adhesive layer and the peeling thereof by the UV absorber can be performed without affecting each other. In one embodiment, 2,2-dimethoxy-1,2-diphenylethan-1-one (e.g., a product available under the product name "IRGACURE 651" from BASF SE) serving as the photopolymerization initiator and the photosensitizer are used in combination. Examples of such photosensitizer include a product available under the product name "UVS-581" from Kawasaki Kasei Chemicals Ltd. and 9,10-diethoxyanthracene (e.g., a product available under the product name "UVS-1101" from Kawasaki Kasei Chemicals Ltd.).

Other examples of the photosensitizer include 9,10-dibutoxyanthracene (e.g., a product available under the product name "UVS-1331" from Kawasaki Kasei Chemicals Ltd.), 2-isopropylthioxanthone, benzophenone, a thioxanthone derivative, and 4,4'-bis(dimethylamino)benzophenone. Examples of the thioxanthone derivative include ethoxycarbonylthioxanthone and isopropylthioxanthone.

The content of the photosensitizer is preferably from 0.01 part by weight to 2 parts by weight, more preferably from 0.5 part by weight to 2 parts by weight with respect to 100 parts by weight of the base polymer.

The active energy ray-curable pressure-sensitive adhesive preferably contains a cross-linking agent. Examples of the cross-linking agent include an isocyanate-based cross-linking agent, an epoxy-based cross-linking agent, an oxazoline-based cross-linking agent, an aziridine-based cross-linking agent, a melamine-based cross-linking agent, a peroxide-based cross-linking agent, a urea-based cross-linking agent, a metal alkoxide-based cross-linking agent, a metal chelate-based cross-linking agent, a metal salt-based cross-linking agent, a carbodiimide-based cross-linking agent, and an amine-based cross-linking agent.

The content of the cross-linking agent is preferably from 0.5 part by weight to 10 parts by weight, more preferably from 1 part by weight to 8 parts by weight with respect to 100 parts by weight of the base polymer of the pressure-sensitive adhesive.

In one embodiment, an isocyanate-based cross-linking agent is preferably used. The isocyanate-based cross-linking agent is preferred because the agent can react with many kinds of functional groups. Specific examples of the isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Nippon Polyurethane Industry Co., Ltd., product name: "CORONATE L"), a trimethylolpropane/hexamethylene diisocyanate trimer adduct (manufactured by Nippon Polyurethane Industry Co., Ltd., product name: "CORONATE HL"), and an isocyanurate form of hexamethylene diisocyanate (manufactured by Nippon Polyurethane Industry Co., Ltd., product name: "CORONATE HX"). Of those, a cross-linking agent having 3 or more isocyanate groups is preferably used.

The active energy ray-curable pressure-sensitive adhesive may further contain any appropriate additive as required. Examples of the additive include an active energy ray polymerization accelerator, a radical scavenger, a tackifier, a plasticizer (e.g., a trimellitate-based plasticizer or a pyromellitate-based plasticizer), a pigment, a dye, a filler, an age resistor, a conductive material, an antistatic agent, a UV absorber, a light stabilizer, a peeling modifier, a softener, a surfactant, a flame retardant, and an antioxidant.

### (UV Absorber)

Any appropriate UV absorber may be used as the UV absorber as long as the absorber is a compound that absorbs UV light (having a wavelength of, for example, 355 nm) . Examples of the UV absorber include a benzotriazole-based UV absorber, a benzophenone-based UV absorber, a triazine-based UV absorber, a salicylate-based UV absorber, and a cyanoacrylate-based UV absorber. Of those, a triazine-based UV absorber or a benzotriazole-based UV absorber is preferred, and a triazine-based UV absorber is particularly preferred. In particular, when an acrylic pressure-sensitive adhesive is used as the pressure-sensitive adhesive A, the triazine-based UV absorber may be preferably used because of its high compatibility with the base polymer of the acrylic pressure-sensitive adhesive. The triazine-based UV absorber more preferably includes a compound having a hydroxy group, and is particularly preferably a UV absorber (hydroxyphenyltriazine-based UV absorber) including a hydroxyphenyltriazine-based compound.

Examples of the hydroxyphenyltriazine-based UV absorber include a reaction product of 2-(4,6-bis(2,4-dimethylphenyl)-1,3,5-triazin-2-yl)-5-hydroxyphenyl and a [(C10-C16 (mainly C12-C13) alkyloxy)methyl]oxirane (product name: "TINUVIN 400", manufactured by BASF SE), 2-[4,6-bis(2,4-dimethylphenyl)-1,3,5-triazin-2-yl]-5-[3-(dodecyloxy)-2-hydroxypropoxy]phenol), a reaction product of 2-(2,4-dihydroxyphenyl)-4,6-bis-(2,4-dimethylphenyl)-1,3,5-triazine and (2-ethylhexyl)-glycidic acid ester (product name: "TINUVIN 405", manufactured by BASF SE), 2,4-bis(2-hydroxy-4-butoxyphenyl)-6-(2,4-dibutoxyphenyl)-1,3,5-triazine (product name: "TINUVIN 460", manufactured by BASF SE), 2-(4,6-diphenyl-1,3,5-triazin-2-yl)-5-[(hexyl)oxy]-phenol (product name: "TINUVIN 1577", manufactured by BASF SE), 2-(4,6-diphenyl-1,3,5-triazin-2-yl)-5-[2-(2-ethylhexanoyloxy)ethoxy]-phenol (product name: "ADK STAB LA-46", manufactured by ADEKA Corporation), 2-(2-hydroxy-4-[1-octyloxycarbonylethoxy]phenyl)-4,6-bis(4-phenylphenyl)-1,3,5-triazine (product name: "TINUVIN 479", manufactured by BASF SE), and a product available under the product name "TINUVIN 477" from BASF SE.

Examples of the benzotriazole-based UV absorber (benzotriazole-based compound) include 2-(2-hydroxy-5-tert-butylphenyl)-2H-benzotriazole (product name: "TINUVIN PS", manufactured by BASF SE), an ester compound of benzenepropanoic acid and 3-(2H-benzotriazol-2-yl)-5-(1,1-dimethylethyl)-4-hydroxy (C7-9 side chain and linear alkyl) (product name: "TINUVIN 384-2", manufactured by BASF SE), a mixture of octyl 3-[3-tert-butyl-4-hydroxy-5-(5-chloro-2H-benzotriazol-2-yl)phenyl] propionate and 2-ethylhexyl-3-[3-tert-butyl-4-hydroxy-5-(5-chloro-2H-benzotriazol-2-yl)phenyl] propionate (product name: "TINUVIN 109", manufactured by BASF SE), 2-(2H-benzotriazol-2-yl)-4,6-bis(1-methyl-1-phenylethyl)phenol (product name: "TINUVIN 900", manufactured by BASF SE), 2-(2H-benzotriazol-2-yl)-6-(1-methyl-1-phenylethyl)-4-(1,1,3,3-tetramethylbutyl)phenol (product name: "TINUVIN 928", manufactured by BASF SE), a reaction product of methyl 3-(3-(2H-benzotriazol-2-yl)-5-tert-butyl-4-hydroxyphenyl) propionate/polyethylene glycol 300 (product name: "TINUVIN 1130", manufactured by BASF SE), 2- (2H-benzotriazol-2-yl) -p-cresol (product name: "TINUVIN P", manufactured by BASF SE), 2- (2H-benzotriazol-2-yl)-4,6-bis(1-methyl-1-phenylethyl)phenol (product name: "TINUVIN 234", manufactured by BASF SE), 2-[5-chloro-2H-benzotriazol-2-yl]-4-methyl-6-(tert-butyl)phenol (product name: "TINUVIN 326", manufactured by BASF SE), 2- (2H-benzotriazol-2-yl) - 4,6-di-tert-pentylphenol (product name: "TINUVIN 328", manufactured by BASF SE), 2-(2H-benzotriazol-2-yl)-4-(1,1,3,3-tetramethylbutyl)phenol (product name: "TINUVIN 329", manufactured by BASF SE), 2,2'-methylenebis[6-(2H-benzotriazol-2-yl)-4-(1,1,3,3-tetramethylbutyl)phenol] (product name: "TINUVIN 360", manufactured by BASF SE), a reaction product of methyl 3-(3-(2H-benzotriazol-2-yl)-5-tert-butyl-4-hydroxyphenyl) propionate and polyethylene glycol 300 (product name: "TINUVIN 213", manufactured by BASF SE), 2-(2H-benzotriazol-2-yl)-6-dodecyl-4-methylphenol (product name: "TINUVIN 571", manufactured by BASF SE), 2-[2-hydroxy-3-(3,4,5,6-tetrahydrophthalimido-methyl)-5-methylphenyl]benzotriazole (product name: "Sumisorb 250", manufactured by Sumitomo Chemical Co., Ltd.), 2-(3-tert-butyl-2-hydroxy-5-methylphenyl)-5-chloro-2H-benzotriazole (product name: "SEESORB 703", manufactured by Shipro Kasei Kaisha, Ltd.), 2-(2H-benzotriazol-2-yl)-4-methyl-6-(3,4,5,6-tetrahydrophthalimidylmethyl)phenol (product name: "SEESORB 706", manufactured by Shipro Kasei Kaisha, Ltd.), 2-(4-benzoyloxy-2-hydroxyphenyl)-5-chloro-2H-benzotriazole (product name: "SEESORB 7012BA", manufactured by Shipro Kasei Kaisha, Ltd.), 2-tert-butyl-6-(5-chloro-2H-benzotriazol-2-yl)-4-methylphenol (product name: "KEMISORB 73", manufactured by Chemipro Kasei Kaisha, Ltd.), 2,2'-methylenebis[6-(2H-benzotriazol-2-yl)-4-tert-octylphenol] (product name: "ADK STAB LA-31", manufactured by ADEKA Corporation), 2-(2H-benzotriazol-2-yl)-p-cellulose (product name: "ADK STAB LA-32", manufactured by ADEKA Corporation), and 2-(5-chloro-2H-benzotriazol-2-yl)-6-tert-butyl-4-methylphenol (product name: "ADK STAB LA-36", manufactured by ADEKA Corporation).

The UV absorber may be a dye or a pigment. Examples of the pigment include azo-based, phthalocyanine-based, anthraquinone-based, lake-based, perylene-based, perinone-based, quinacridone-based, thioindigo-based, dioxazine-based, isoindolinone-based, and quinophthalone-based pigments. Examples of the dye include azo-based, phthalocyanine-based, anthraquinone-based, carbonyl-based, indigo-based, quinone imine-based, methine-based, quinoline-based, and nitro-based dyes.

In one embodiment, the UV absorber having low compatibility with the base polymer is used. When the UV absorber having low compatibility is used, a sea-island structure in which the UV absorber serves as the island and the base polymer serves as the sea is formed, and the UV absorber can be unevenly distributed so as to be present in a larger amount in the vicinity of the surface as compared to the center of the thickness of the pressure-sensitive adhesive layer. The compatibility between the base polymer and the UV absorber may utilize Hansen solubility parameters (HSPs) as an indicator. Ra according to the Hansen solubility parameters (HSPs) is preferably 6 or more, more preferably 8 or more, still more preferably 10 or more. The upper limit of the Ra according to the Hansen solubility parameters (HSPs) is, for example, 46.

The Hansen solubility parameters (HSPs) are expressed in a three-dimensional space obtained by dividing a Hildebrand solubility parameter δ into three components: a dispersion term δ_{d}, a polar term δₚ, and a hydrogen bond term δₕ, and a relationship: δ2=δd²+δp²+δh² is established. The dispersion term δ_{d} indicates the effect exhibited by a dispersion force, the polar term δₚ indicates the effect exhibited by a dipole-dipole force, and the hydrogen bond term δₕ indicates the effect exhibited by a hydrogen bond force. The distance Ra of the HSPs of two substances is represented by Ra={4Δδ_{d}²+Δδₚ²+Δδₕ²}^{1/2} from a difference Δδ_{d} between the dispersion terms of the two substances, a distance Δδₚ between the poler terms thereof, and a difference Δδₕ between the hydrogen bond terms thereof. When the Ra is smaller, the compatibility is higher, and when the Ra is larger, the compatibility is lower. The details on the Hansen solubility parameters are described in Charles M. Hansen, Hansen Solubility Parameters: A Users Handbook (CRC Press, 2007), and substances in which literature values thereof and the like are unknown may be calculated through use of computer software Hansen Solubility Parameters in Practice (HSPiP).

Examples of the UV absorber having low compatibility with the base polymer include, depending on the configuration of the base polymer, a reaction product of 2-(2,4-dihydroxyphenyl)-4,6-bis-(2,4-dimethylphenyl)-1,3,5-triazine and (2-ethylhexyl)-glycidic acid ester (product name: "TINUVIN 405", manufactured by BASF SE), 2-(2H-benzotriazol-2-yl)-6-(1-methyl-1-phenylethyl)-4-(1,1,3,3-tetramethylbutyl)phenol (product name: "TINUVIN 928", manufactured by BASF SE), 2-[4-[(2-hydroxy-3-(2'-ethyl)hexyl)oxy]-2-hydroxyphenyl]-4,6-bis(2,4-dimethylphenyl)-1,3,5-triazine (product name: "TINUVIN 400", manufactured by BASF SE), an ester compound of B benzenepropanoic acid and 3-(2H-benzotriazol-2-yl)-5-(1,1-dimethylethyl)-4-hydroxy (C7-9 side chain and linear alkyl) (product name: "TINUVIN 384-2", manufactured by BASF SE), and a product available under the product name "TINUVIN 477" from BASF SE.

The molecular weight of the compound for forming the UV absorber is preferably from 100 to 1,500, more preferably from 200 to 1,200, still more preferably from 200 to 1,000. When a compound having a small molecular weight (for example, a compound having a molecular weight of 600 or less) is used as the UV absorber, the UV absorber is easily unevenly distributed in the vicinity of the surface.

The maximum absorption wavelength of the UV absorber is preferably from 300 nm to 450 nm, more preferably from 320 nm to 400 nm, still more preferably from 330 nm to 380 nm. A difference between the maximum absorption wavelength of the UV absorber and the maximum absorption wavelength of the photopolymerization initiator is preferably 10 nm or more, more preferably 25 nm or more.

The 5% weight loss temperature of the UV absorber is preferably 350°C or less, more preferably 330°C or less. The lower limit of the 5% weight loss temperature of the UV absorber is, for example, 100°C. When the 5% weight loss temperature falls within such ranges, a pressure-sensitive adhesive sheet that causes strain more efficiently through laser light irradiation can be obtained. The 5% weight loss temperature of the UV absorber means a temperature at the time point when the weight of the UV absorber at the time of an increase in temperature of the UV absorber reduces by 5 wt% as compared to the weight thereof before the temperature increase. The 5% weight loss temperature is measured with a differential thermal analyzer under the following measurement conditions: the measurement is performed under an air atmosphere at a rate of temperature increase of 10°C/min and a flow rate of 25 ml/min.

The content of the UV absorber is preferably from 1 part by weight to 50 parts by weight, more preferably from 5 parts by weight to 20 parts by weight with respect to 100 parts by weight of the base polymer in the pressure-sensitive adhesive layer. When the content falls within such ranges, there can be obtained such a pressure-sensitive adhesive sheet that when the pressure-sensitive adhesive strength of the entirety of its pressure-sensitive adhesive layer is satisfactorily reduced by active energy ray irradiation, the curing of the pressure-sensitive adhesive layer satisfactorily progresses, and satisfactory peelability is exhibited by laser light irradiation.

### C. Base Material

The base material may include any appropriate resin. Examples of the resin include a polyolefin-based resin, such as a polyethylene-based resin, a polypropylene-based resin, a polybutene-based resin, or a polymethylpentene-based resin, a polyurethane-based resin, a polyester-based resin, a polyimide-based resin, a polyetherketone-based resin, a polystyrene-based resin, a polyvinyl chloride-based resin, a polyvinylidene chloride-based resin, a fluorine-based resin, a silicon-based resin, a cellulose-based resin, and an ionomer resin. Of those, a polyolefin-based resin is preferred.

The thickness of the base material is preferably from 2 µm to 300 um, more preferably from 2 µm to 100 um, still more preferably from 2 µm to 50 µm.

The transmittance of the base material for light having a wavelength of 355 nm is preferably 70% or more, more preferably 80% or more, still more preferably 90% or more, particularly preferably 95% or more. The upper limit of the total light transmittance of the base material is, for example, 98% (preferably 99%) .

### D. Method of producing Pressure-sensitive Adhesive Sheet

The pressure-sensitive adhesive sheet may be produced by any appropriate method. The pressure-sensitive adhesive sheet may be obtained by, for example, applying the pressure-sensitive adhesive onto the base material or the release liner. Various methods, such as bar coater coating, air knife coating, gravure coating, gravure reverse coating, reverse roll coating, lip coating, die coating, dip coating, offset printing, flexographic printing, and screen printing, may each be adopted as a method for the application. In addition, for example, a method involving separately forming the pressure-sensitive adhesive layer on a release liner and then bonding the resultant to the base material may be adopted. When the pressure-sensitive adhesive is dried in air, the UV absorber tends to be unevenly distributed to the surface on the air side. In addition, the degree of uneven distribution may be varied depending on the surface characteristics of the base material and the release liner. When the UV absorber is unevenly distributed only in the vicinity of any of the surfaces, a surface to which the UV absorber is unevenly distributed is set to the first surface, and this surface may serve as an adherend placement surface.

### E. Method of using Pressure-sensitive Adhesive Sheet

The pressure-sensitive adhesive sheet of the present invention may be used for temporarily fixing any appropriate member to be processed (e.g., an electronic part) at the time of the processing of the member to be processed. A method of using the pressure-sensitive adhesive sheet of the present invention is, for example, a usage method including: (i) bonding and fixing the member to be processed to the pressure-sensitive adhesive sheet; (ii) processing the member to be processed; (iii) irradiating the entirety of the pressure-sensitive adhesive layer of the pressure-sensitive adhesive sheet with an active energy ray (e.g., UV light) to reduce the pressure-sensitive adhesive strength of the pressure-sensitive adhesive sheet; and (iv) irradiating a site where the expression of peelability is desired with laser light to peel the member to be processed. According to the method, the member to be processed can be peeled by its free fall. In addition, when a plurality of members to be processed are temporarily fixed, only part of the members can be peeled. When the pressure-sensitive adhesive sheet of the present invention is used, the pressure-sensitive adhesive strength can be reduced to such an extent that an adherend freely falls, and hence even extremely small (e.g., 50-micrometer square) members to be processed can be peeled one by one separately.

### Examples

Now, the present invention is specifically described by way of Examples. However, the present invention is by no means limited to these Examples. Test and evaluation methods in Examples are as described below. In addition, the terms "part(s)" and "%" are by weight unless otherwise stated.

### (1) Uneven Distribution of UV Absorber (SLIC, S2/C)

The cross-section of a pressure-sensitive adhesive layer was subjected to an Ar gas cluster ion etching method, and the distribution of a UV absorber in a thickness direction of the pressure-sensitive adhesive layer was recognized. Based on the structure of the UV absorber, components from the UV absorber were detected by the TOF-SIMS. Based on the obtained presence distribution of the UV absorber, S1/C and S2/C were determined from a maximum value S1 of a detection intensity of the UV absorber in a range of from one surface (first surface) of the pressure-sensitive adhesive layer to a depth of 1 *µ*m in the thickness direction, a maximum value S2 of a detection intensity of the UV absorber in a range of from the other surface (second surface) to a depth of 1 *µ*m in the thickness direction, and a detection intensity C of the UV absorber at a center point in the thickness direction of the pressure-sensitive adhesive layer.

The measurement conditions for TOF-SIMS analysis were as described below.
Apparatus name: TRIFT V manufactured by ULVAC-PHI, Inc.
Etching ion: Ar gas cluster ion (Arn⁺)
Etching ion acceleration voltage: 17 kV
Etching area: 400 µm square
Radiated primary ions: Bi₃²⁺
Primary ion acceleration voltage: 30 kV
Measurement area: 100 um square
Measurement polarity: negative ions
*A neutralization gun for charge correction is used for measurement.

### (2) Haze Value

A large slide glass (manufactured by Matsunami Glass Ind., Ltd., product name: "S9111") was set so that incident light vertically entered the surface of the slide glass, followed by the measurement of its haze value with a haze meter (product name: "HAZE METER HM-150", manufactured by Murakami Color Research Laboratory Co., Ltd.). After that, a PET separator on one surface of a pressure-sensitive adhesive sheet was peeled, and the sheet was bonded to the large slide glass after the measurement of its haze value with a hand roller, followed by the measurement of a haze value again under a state in which a PET separator on the other surface was peeled. The haze value of the pressure-sensitive adhesive sheet was obtained by subtracting the haze value of only the slide glass from the resultant haze value.

### (3) Transmittance for Light having Wavelength of 355 nm

A PET separator on one surface of a pressure-sensitive adhesive sheet was peeled, and the sheet was bonded to a large slide glass (manufactured by Matsunami Glass Ind., Ltd., product name: "S9111") with a hand roller, followed by measurement under a state in which a PET separator on the other surface was peeled. Specifically, a transmittance for light having a wavelength of 355 nm in the pressure-sensitive adhesive sheet itself on the large slide glass was measured with a spectrophotometer (product name: "SPECTROPHOTOMETER U-4100", manufactured by Hitachi High-Tech Science Corporation).

### (4) Pressure-sensitive Adhesive Strength

One surface (first surface) of the pressure-sensitive adhesive layer of a pressure-sensitive adhesive sheet was bonded to SUS403, and a pressure-sensitive adhesive strength with respect to the pressure-sensitive adhesive sheet was measured by a method (bonding condition: one reciprocation of a 2-kilogram roller, tensile rate: 300 mm/min, peel angle: 180°, measurement temperature: 23°C) in conformity with JIS Z 0237:2000.

### (5) Peelability

### •Peelability of First Surface

A PET separator on the second surface side of a pressure-sensitive adhesive sheet was peeled, and the sheet was bonded to a large slide glass (manufactured by Matsunami Glass Ind., Ltd., product name: "S9111") with a hand roller. After that, a PET separator on the other surface (first surface) was peeled, and a 100-micrometer square silicon chip was bonded to the pressure-sensitive adhesive surface of the sheet.

With regard to the pressure-sensitive adhesive sheet of Example 7, UV light (specific wavelength: 365 nm, integrated light quantity: 300 mJ/cm²) of a high-pressure mercury lamp was applied from the slide glass surface side of the resultant sample to the entire surface thereof through of a UV irradiation apparatus (manufactured by Nitto Seiki Co., Ltd., product name: "UM-810").

Laser light having a wavelength of 355 nm was applied from the large slide glass side of the sample only to a target member position (1 plus per chip) in an application area of 80 umϕ at an output of 0.1 W, and a case in which the chip freely fell was regarded as a success (o), while a case in which the chip did not freely fall was regarded as a failure (×) .

### •Peelability of Second Surface

In addition, evaluation was performed in the same manner as in the section "Peelability of First Surface" except that the front and rear surfaces of the pressure-sensitive adhesive layer were reversed. That is, a PET separator on the first surface side of a pressure-sensitive adhesive sheet was peeled, and the sheet was bonded to a large slide glass (manufactured by Matsunami Glass Ind., Ltd., product name: "S9111") with a hand roller. After that, a PET separator on the other surface (second surface) was peeled, and a 100-micrometer square silicon chip was bonded to the pressure-sensitive adhesive surface of the sheet.

With regard to the pressure-sensitive adhesive sheet of Example 7, UV light (specific wavelength: 365 nm, integrated light quantity: 300 mJ/cm²) of a high-pressure mercury lamp was applied from the slide glass surface side of the resultant sample to the entire surface thereof through of a UV irradiation apparatus (manufactured by Nitto Seiki Co., Ltd., product name: "UM-810").

Laser light having a wavelength of 355 nm was applied from the large slide glass side of the sample only to a target member position (1 plus per chip) in an application area of 80 pmϕ at an output of 0.1 W, and a case in which the chip freely fell was regarded as a success (o), while a case in which the chip did not freely fall was regarded as a failure (×).

### [Production Example 1] Preparation of Acrylic Polymer I

100 Parts by weight of 2-methoxyethyl acrylate, 27 parts by weight of acryloylmorpholine, and 22 parts by weight of 2-hydroxyethyl acrylate were mixed to prepare a monomer composition.

Next, nitrogen was introduced into a reaction vessel including a nitrogen inlet tube, a temperature gauge, and a stirrer. Under a nitrogen atmosphere, 500 parts by weight of toluene, 149 parts by weight of the monomer composition, and 0.3 part by weight of benzoyl peroxide (BPO) were loaded into the vessel, and were stirred at 60°C for 5 hours. After that, the mixture was cooled to room temperature, and 24 parts by weight of 2-methacryloyloxyethyl isocyanate was added to, and caused to react with, the resultant copolymer to add an NCO group to a terminal OH group in a 2-hydroxyethyl acrylate side chain in the copolymer. Thus, an acrylic polymer solution I containing an acrylic polymer I having a carbon-carbon double bond at a terminal thereof and having a weight-average molecular weight of 1,000,000 was obtained.

### [Production Example 2] Preparation of Acrylic Polymer II

89 Parts by weight of 2-ethylhexyl acrylate and 11 parts by weight of hydroxyethyl acrylate were mixed to prepare a monomer composition.

Next, nitrogen was introduced into a reaction vessel including a nitrogen inlet tube, a temperature gauge, and a stirrer. Under a nitrogen atmosphere, 43 parts by weight of toluene, 100 parts by weight of the monomer composition, and 0.2 part by weight of azobisisobutyronitrile (AIBN) were loaded into the vessel, and were stirred at 60°C for 4 hours. After that, the mixture was cooled to room temperature, and 12 parts by weight of 2-methacryloyloxyethyl isocyanate was added to, and caused to react with, the resultant copolymer to add an NCO group to a terminal OH group in a 2-hydroxyethyl acrylate side chain in the copolymer. Thus, an acrylic polymer solution II containing an acrylic polymer II having a carbon-carbon double bond at a terminal thereof and having a weight-average molecular weight of 1,000,000 was obtained.

### [Example 1]

### (Preparation of Pressure-sensitive Adhesive)

3 Parts by weight of a cross-linking agent (manufactured by Nippon Polyurethane Industry Co., Ltd., product name: "CORONATE L") and 20 parts by weight of a UV absorber (manufactured by BASF Japan Ltd., product name: "Tinuvin 477") were added to the acrylic polymer solution I containing 100 parts by weight of the acrylic polymer I to provide a pressure-sensitive adhesive (1).

### (Pressure-sensitive Adhesive Sheet)

The pressure-sensitive adhesive (1) was applied to the silicone-treated surface of a PET separator (thickness: 38 µm), and was then heated at 130°C for 2 minutes to form a pressure-sensitive adhesive layer having the first surface exposed and having a thickness of 5 um.

Another PET separator was bonded onto the first surface of the pressure-sensitive adhesive layer with a hand roller to provide a pressure-sensitive adhesive sheet with separators.

The obtained pressure-sensitive adhesive sheet was subjected to the above-mentioned evaluations. The results are shown in Table 1. In addition, a TOF-SIMS analysis chart measured in the evaluation of the "Uneven Distribution of UV Absorber" is shown in FIG. 2.

### [Example 2]

A pressure-sensitive adhesive sheet with separators was obtained in the same manner as in Example 1 except that the blending amount of the UV absorber (manufactured by BASF Japan Ltd., product name: "Tinuvin 477") was set to 5 parts by weight. The obtained pressure-sensitive adhesive sheet was subjected to the above-mentioned evaluations. The results are shown in Table 1.

### [Example 3]

A pressure-sensitive adhesive sheet with separators was obtained in the same manner as in Example 1 except that 10 parts by weight of a UV absorber (manufactured by BASF Japan Ltd., product name: "Tinuvin 405") was used instead of 20 parts by weight of the UV absorber (manufactured by BASF Japan Ltd., product name: "Tinuvin 477"). The obtained pressure-sensitive adhesive sheet was subjected to the above-mentioned evaluations. The results are shown in Table 1.

### [Example 4]

A pressure-sensitive adhesive sheet with separators was obtained in the same manner as in Example 1 except that 10 parts by weight of a UV absorber (manufactured by BASF Japan Ltd., product name: "Tinuvin 928") was used instead of 20 parts by weight of the UV absorber (manufactured by BASF Japan Ltd., product name: "Tinuvin 477"). The obtained pressure-sensitive adhesive sheet was subjected to the above-mentioned evaluations. The results are shown in Table 1.

### [Example 5]

A pressure-sensitive adhesive sheet with separators was obtained in the same manner as in Example 1 except that 5 parts by weight of a UV absorber (manufactured by BASF Japan Ltd., product name: "Tinuvin 928") was used instead of 20 parts by weight of the UV absorber (manufactured by BASF Japan Ltd., product name: " Tinuvin 477"). The obtained pressure-sensitive adhesive sheet was subjected to the above-mentioned evaluations. The results are shown in Table 1.

### [Example 6]

A pressure-sensitive adhesive sheet with separators was obtained in the same manner as in Example 1 except that 5 parts by weight of a UV absorber (manufactured by Chemipro Kasei Kaisha, Ltd., product name: "KEMISORB 102L") was used instead of 20 parts by weight of the UV absorber (manufactured by BASF Japan Ltd., product name: "Tinuvin 477"). The obtained pressure-sensitive adhesive sheet was subjected to the above-mentioned evaluations. The results are shown in Table 1.

### [Example 7]

### (Preparation of Pressure-sensitive Adhesive)

3 Parts by weight of a cross-linking agent (manufactured by Nippon Polyurethane Industry Co., Ltd., product name: "CORONATE L"), 3 parts by weight of a photopolymerization initiator (manufactured by BASF SE, product name: "IRGACURE 369"), and 5 parts by weight of a UV absorber (manufactured by Chemipro Kasei Kaisha, Ltd., product name: "KEMISORB 102L") were added to the acrylic polymer solution I containing 100 parts by weight of the acrylic polymer I to provide a pressure-sensitive adhesive (7).

### (Production of Pressure-sensitive Adhesive Sheet)

The pressure-sensitive adhesive (7) was applied to the silicone-treated surface of a PET separator (thickness: 38 um), and was then heated at 130°C for 2 minutes to form a pressure-sensitive adhesive layer having the first surface exposed and having a thickness of 5 um.

Another PET separator was bonded onto the first surface of the pressure-sensitive adhesive layer with a hand roller to provide a pressure-sensitive adhesive sheet with separators.

The obtained pressure-sensitive adhesive sheet was subjected to the above-mentioned evaluations. The results are shown in Table 1.

### [Example 8]

A pressure-sensitive adhesive sheet with separators was obtained in the same manner as in Example 1 except that 20 parts by weight of a UV absorber (manufactured by Chemipro Kasei Kaisha, Ltd., product name: "KEMISORB 111") was used instead of 20 parts by weight of the UV absorber (manufactured by BASF Japan Ltd., product name: "Tinuvin 477"). The obtained pressure-sensitive adhesive sheet was subjected to the above-mentioned evaluations. The results are shown in Table 1.

### [Comparative Example 1]

A pressure-sensitive adhesive sheet with separators was obtained in the same manner as in Example 1 except that no UV absorber was blended. The obtained pressure-sensitive adhesive sheet was subjected to the above-mentioned evaluations. The results are shown in Table 1.

### [Comparative Example 2]

A pressure-sensitive adhesive sheet with separators was obtained in the same manner as in Example 1 except that 5 parts by weight of a UV absorber (manufactured by Chemipro Kasei Kaisha, Ltd., product name: "KEMISORB 111") was used instead of 20 parts by weight of the UV absorber (manufactured by BASF Japan Ltd., product name: "Tinuvin 477"). The obtained pressure-sensitive adhesive sheet was subjected to the above-mentioned evaluations. The results are shown in Table 1.

### [Comparative Example 3]

### (Preparation of Pressure-sensitive Adhesive)

3 Parts by weight of a cross-linking agent (manufactured by Nippon Polyurethane Industry Co., Ltd., product name: "CORONATE L") and 5 parts by weight of a UV absorber (manufactured by BASF Japan Ltd., product name: "Tinuvin 477") were added to the acrylic polymer solution II containing 100 parts by weight of the acrylic polymer II to provide a pressure-sensitive adhesive (C3).

### (Pressure-sensitive Adhesive Sheet)

The pressure-sensitive adhesive (C3) was applied to the silicone-treated surface of a PET separator (thickness: 38 µm), and was then heated at 130°C for 2 minutes to form a pressure-sensitive adhesive layer having the first surface exposed and having a thickness of 5 um.

Another PET separator was bonded onto the first surface of the pressure-sensitive adhesive layer with a hand roller to provide a pressure-sensitive adhesive sheet with separators.

The obtained pressure-sensitive adhesive sheet was subjected to the above-mentioned evaluations. The results are shown in Table 1.

**Table 1**

| | Polymer of pressure-sensitive adhesive layer | Cross-linking agent | | UV absorber | | Photopolymerization initiator | | Thickness of pressure-sensitive adhesive layer | TOF-SIMS analysis | | Haze value | 355 nm transmittance | Pressure-sensitive adhesive strength | Peelability | |
|---|---|---|---|---|---|---|---|---|---|---|---|---|---|---|---|
| | | Kind | Content (part(s) by weight) | Kind | Content (part(s) by weight) | Kind | 1 Content (part (s) by weight) | | S1/C | S2/C | % | % | [N/20 mm] | First surface | Second surface |
| Example 1 | I | C/L | 3 | Tinuvin 477 | 20 | - | - | 5 µm | 5.6 | 2.4 | 15.9 | 0.1 | 5.0 | ○ | ○ |
| Example 2 | I | C/L | 3 | Tinuvin 477 | 5 | - | - | 5 µm | 15.4 | 11.7 | 0.9 | 3.9 | 5.4 | ○ | ○ |
| Example 3 | I | C/L | 3 | Tinuvin 405 | 10 | - | - | 5 µm | 3.6 | 1.3 | 1.4 | 4.9 | 5.5 | ○ | ○ |
| Example 4 | I | C/L | 3 | Tinuvin 928 | 10 | - | - | 5 µm | 6.1 | 2.0 | 1.0 | 4.4 | 0.3 | ○ | ○ |
| Example 5 | I | C/L | 3 | Tinuvin 928 | 5 | - | - | 5 µm | 12.1 | 5.3 | 0.8 | 22.2 | 4.3 | ○ | ○ |
| Example 6 | I | C/L | 3 | KEMISORB 102L | 5 | - | - | 5 µm | 12.8 | 11.0 | 1.0 | 16.2 | 3.7 | ○ | ○ |
| Example 7 | I | C/L | 3 | KEMISORB 102L | 5 | Irg 369 | 3 | 5 µm | 13.6 | 10.4 | 0.9 | 15.9 | 3.5 | ○ | ○ |
| Example 8 | I | C/L | 3 | KEMISORB 111 | 20 | - | - | 5 µm | 1.2 | 1.0 | 0.7 | 0.9 | 6.4 | ○ | × |
| Comparative Example 1 | I | C/L | 3 | - | - | - | - | 5 µm | - | - | 0.6 | 100.0 | 6.0 | × | × |
| Comparative Example 2 | I | C/L | 3 | ΣCEMISORS 111 | 5 | - | - | 5 µm | 1.0 | 1.0 | 0.7 | 24.9 | 5.1 | × | × |
| Comparative Example 3 | II | C/L | 3 | Tinuvin 477 | 5 | - | - | 5 µm | 1.0 | 1.0 | 0.5 | 19.5 | 0.2 | × | × |

As is apparent from Table 1, in the pressure-sensitive adhesive sheet in which the UV absorber is unevenly distributed in the vicinity of the surface of the pressure-sensitive adhesive layer, preferred peelability is expressed on the surface. An adherend can be peeled from such pressure-sensitive adhesive sheet by low-output laser light irradiation, and hence damage to the adherend can be suppressed.

### Reference Signs List

**10** pressure-sensitive adhesive layer
**20** base material
**100, 200** pressure-sensitive adhesive sheet

## Claims

1. A pressure-sensitive adhesive sheet, comprising a pressure-sensitive adhesive layer containing a UV absorber,
wherein the pressure-sensitive adhesive layer has a first surface and a second surface opposed to the first surface, and
wherein a maximum value S1 of a detection intensity of the UV absorber by time-of-flight secondary ion mass spectrometry (TOF-SIMS) in a range of from the first surface to a depth of 1 µm in a thickness direction and a detection intensity C of the UV absorber by the TOF-SIMS at a center point in the thickness direction of the pressure-sensitive adhesive layer satisfy a relationship: S1/C>1.1.

2. The pressure-sensitive adhesive sheet according to claim 1, wherein a maximum value S2 of a detection intensity of the UV absorber by the TOF-SIMS in a range of from the second surface to a depth of 1 µm in the thickness direction and the detection intensity C of the UV absorber by the TOF-SIMS at the center point in the thickness direction of the pressure-sensitive adhesive layer satisfy a relationship: S2/C≥1.1.
